Europäisches Patentamt

European Patent Office

Office européen des brevets

(19)

(11) **EP 1 064 807 B1**

(12) **EUROPÄISCHE PATENTSCHRIFT**

(45) Veröffentlichungstag und Bekanntmachung des Hinweises auf die Patenterteilung:
**24.04.2002   Patentblatt 2002/17**

(21) Anmeldenummer: **99939864.7**

(22) Anmeldetag: **17.03.1999**

(51) Int Cl.[7]: **H04Q 7/34**

(86) Internationale Anmeldenummer:
**PCT/CH99/00120**

(87) Internationale Veröffentlichungsnummer:
**WO 99/48316 (23.09.1999 Gazette 1999/38)**

(54) **VERFAHREN ZUR QUALITÄTSERMITTLUNG VON MOBILGERÄTEN IN EINEM MOBILFUNKNETZ**

METHOD FOR DETERMINING THE QUALITY OF MOBILE RADIOTELEPHONE UNITS IN A MOBILE RADIOTELEPHONE NETWORK

PROCEDE POUR DETERMINER LA QUALITE D'APPAREILS RADIOTELEPHONIQUES MOBILES DANS UN RESEAU RADIOTELEPHONIQUE MOBILE

(84) Benannte Vertragsstaaten:
**AT CH DE FR IT LI NL SE**

(30) Priorität: **19.03.1998   CH 66898**

(43) Veröffentlichungstag der Anmeldung:
**03.01.2001   Patentblatt 2001/01**

(73) Patentinhaber: **Swisscom Mobile AG**
**3050 Bern (CH)**

(72) Erfinder: **RITTER, Rudolf**
**CH-3052 Zollikofen (CH)**

(74) Vertreter: **BOVARD AG - Patentanwälte**
**Optingenstrasse 16**
**3000 Bern 25 (CH)**

(56) Entgegenhaltungen:
**EP-A- 0 431 956          US-A- 5 644 623**
**US-A- 5 694 451          US-A- 5 706 333**

**Beschreibung**

Die vorliegende Erfindung betrifft ein Verfahren zur Ermittlung der mit verschiedenen Mobilgeräten erreichten Qualität in einem Mobilfunknetz, zum Beispiel in einem digitalen Mobilfunknetz, in welchem Verfahren ein Benutzer eines Mobilgeräts informiert wird, wenn sein Mobilgerät gewisse Qualitätskriterien nicht erfüllt.

Die Kommunikationsqualität in einem Mobilfunknetz hängt von der Qualität der Infrastruktur ab, einschliesslich der Basisstationen und anderer fester Komponenten des Netzes, sowie von der Qualität der benutzen Mobilgeräte, zum Beispiel Mobiltelefone. Da Mobilgeräte Konsumgüter sind, die von mehreren verschiedenen Herstellern in verschiedenen Preisklassen angeboten werden, kann deren Qualität sehr unterschiedlich sein. Die Kommunikationsqualität hängt ausserdem von der Installation dieser Mobilgeräte ab ; wenn zum Beispiel ein Mobiltelefon in einem Auto mit gefärbten Fensterscheiben benutzt wird, kann die Qualität stark verbessert werden, indem eine Aussenantenne installiert wird.

Ein Netzbetreiber versucht im allgemeinen allen seinen Abonnenten ein Mindestmass an Qualität zu gewährleisten. Die Anforderungen an die Infrastruktur müssen dann auf die benutzten Mobilgeräte von schlechtester Qualität angepasst werden, was für bessere Mobilgeräte kaum Vorteile bringt und daher eine Ressourcenverschwendung darstellt. Der Netzbetreiber ist daher wirtschaftlich stark daran interessiert, dass die mit schlechten Mobilgeräten ausgerüsteten Abonnenten ihre Geräte gegen bessere austauschen oder dass ineffiziente Installationen verbessert werden.

Das Patentdokument US 5490204 beschreibt ein Verfahren, mit dem die Qualität der Infrastruktur in einem Mobilfunknetz getestet werden kann. Zu diesem Zweck wird ein Testmobilgerät gebraucht, das verschiedene Testanrufe in verschiedenen Punkten in einem Mobilfunknetz durchführt, um die Qualität von verschiedenen Komponenten, zum Beispiel verschiedenen Basisstationen, im Netz zu prüfen. Das Testgerät umfasst einen Laptop, der mit einem Mobiltelefon verbunden ist, und wird von einem geeigneten Programm gesteuert. Ein Operateur fährt mit diesem Testmobilgerät durch die vom Netz abgedeckte Region, um die Qualität der Verbindungen an verschiedenen Orten im Netz zu messen. Dieses Verfahren erlaubt es nicht, die Qualität von benutzten Endgeräten zu prüfen.

Die Patentanmeldung WO96/07288 beschreibt ein System, in welchem die Qualität eines Mobilgeräts beim Einloggen getestet wird. Die Qualitätskontrolle basiert auf Angaben des Mobilgeräts, zum Beispiel auf einem vom Mobilgerät ausgesandten Signal, in welchem der Typ des Mobilgeräts kodiert ist. In einer Variante wird diese Qualität mit einer Datenbank des Netzbetreibers ermittelt, in welcher der Typ von allen abonnierten Geräten gespeichert wird. Die Sendestärke des Basisstationen sowie der benutzte Tarif werden, in Abhängigkeit von den Informationen, die das Mobilgerät oder die Datenbank angeben, angepasst.

Bei diesem Verfahren wird die Qualität der Geräte ein für allemal ermittelt, entweder im Mobilgerät oder in der Datenbank. Dieses Verfahren erlaubt es daher nicht, den Benutzer darauf hinzuweisen, wenn die Qualität seines Geräts sinkt, zum Beispiel wegen eines technischen Problems oder einer schlechten Installation.

In der Patentschrift US 5 706 333 wird ein Verfahren zur Detektierung von fehlerhaften Mobiltelefonen in einem Mobilfunknetz beschrieben. Gemäss dem in der Patentschrift US 5 706 333 beschriebenen Verfahren werden durch eine Vielzahl von Messeinheiten, die vorzugsweise jeweils einer Basisstation zugeordnet sind, Parameter der Signale gemessen, die von Mobiltelefonen und Basisstationen ausgesandt werden, beispielsweise die Signalstärke oder die Trägerfrequenz Gemäss der US 5 706 333 können zwar sämtliche eingeleiteten Anrufe detektiert werden, die Zahl der Anrufe, die zur selben Zeit mittels der Messeinheiten gemessen werden können ist allerdings begrenzt, so dass Mobilfunktelefone, für die Anrufe messtechnisch untersucht werden sollen, anhand vordefinierter Kriterien bestimmt werden. Gemäss der US 5 706 333 werden die gemessenen Parameter an eine Testsystemkontrolleinheit übertragen, welche die gemessenen Parameter zur Detektierung von fehlerhaften Mobiltelefonen mit zulässigen Grenzwerten und gespeicherten Informationen vergleicht. Die Testsystemkontrolleinheit wird gemäss der US 5 706 333 zudem von einer Netzwerkkontrolleinheit unter Angabe eines Fehlertyps über fehlgeschlagene Anrufe benachrichtigt. Aus den gemessenen Parametern können gemäss der US 5 706 333 Mischwerte mit Minimal-, Maximal- und Durchschnittswerten sowie Standardabweichungen ermittelt und gespeichert werden. Mittels eines regelbasierten Expertensystems werden gemäss der US 5 706 333, basierend auf den gemessenen Parametern und ermittelten Mischwerten, für bestimmte Mobiltelefone Schlüsse betreffend deren Fehlerhaftigkeit gezogen. Gemäss der US 5 706 333 werden die Benutzer von fehlerhaften Mobiltelefonen, beispielsweise durch ein automatisiertes Briefsystem oder mittels computer-generierter Sprache, informiert.

Es ist eine Aufgabe der vorliegenden Erfindung, ein neues Verfahren vorzuschlagen, um Mobilfunkteilnehmer, die mit schlechteren Mobilgeräten ausgerüstet sind, zu identifizieren, und sie dazu zu veranlassen, ihre Geräte auszutauschen oder die Installation zu verbessern, wobei zur Ermittlung der mit verschiedenen Mobilgeräten erreichten Qualität insbesondere keine speziellen Messeinrichtungen benötigt werden sollen und wobei die ermittelten Qualitätsparameter insbesondere untereinander vergleichbar und statistisch auswertbar sein sollen.

Gemäss der Erfindung errechnet ein Server im Mobilfunknetz für jedes Mobilgerät mindestens eine Qualitätsangabe aus einer Pluralität von Verbindungen mit diesem Mobilgerät, wobei die Errechnung auf Qualitätsparametern basiert, die für jede Verbindung mit diesem Mobilgerät durch die Basisstationen des Mobilfunknetzes ermittelt werden, und wobei die ermittelten Qualitätsparameter jeweils aus einem binären Wert bestehen, der den Erfolg oder Misserfolg einer Verbindung angibt. Der Benutzer eines Mobilgerätes, das ein oder mehrere aufgestellte Qualitätskriterien nicht erreicht, wird dann informiert, zum Beispiel mit einem Hinweis in seiner Telekommunikationsrechnung oder mit einer alphanumerischen Meldung auf seinem Mobilgerät.

Der Benutzer wird auf diese Weise dazu veranlasst, sein Mobilgerät zu ersetzen oder reparieren zu lassen, oder die Installation zu verbessern, so dass es für den Netzbetreiber einfacher sein wird, ein Mindestmass an Qualität für jeden Benutzer zu gewährleisten.

Die vorliegende Erfindung wird mithilfe der als Beispiel gegebenen Beschreibung besser verständlich und durch die anliegenden Figuren veranschaulicht, welche folgendes zeigen:

Die Figur 1 eine schematische Ansicht eines Mobilfunknetzes gemäss der Erfindung, in welchem ein Server die mit verschiedenen Mobilgeräten erreichte Qualität ermittelt.

Die Figur 2 eine Tabelle, in welcher der Server die Qualitätsparameter sammelt.

Die Figur 3 ein Diagramm, das schematisch ein mögliches Verfahren zur Ermittlung der Qualität von Mobilfunkgeräten und von Basisstationen in einem Mobilfunknetz zeigt.

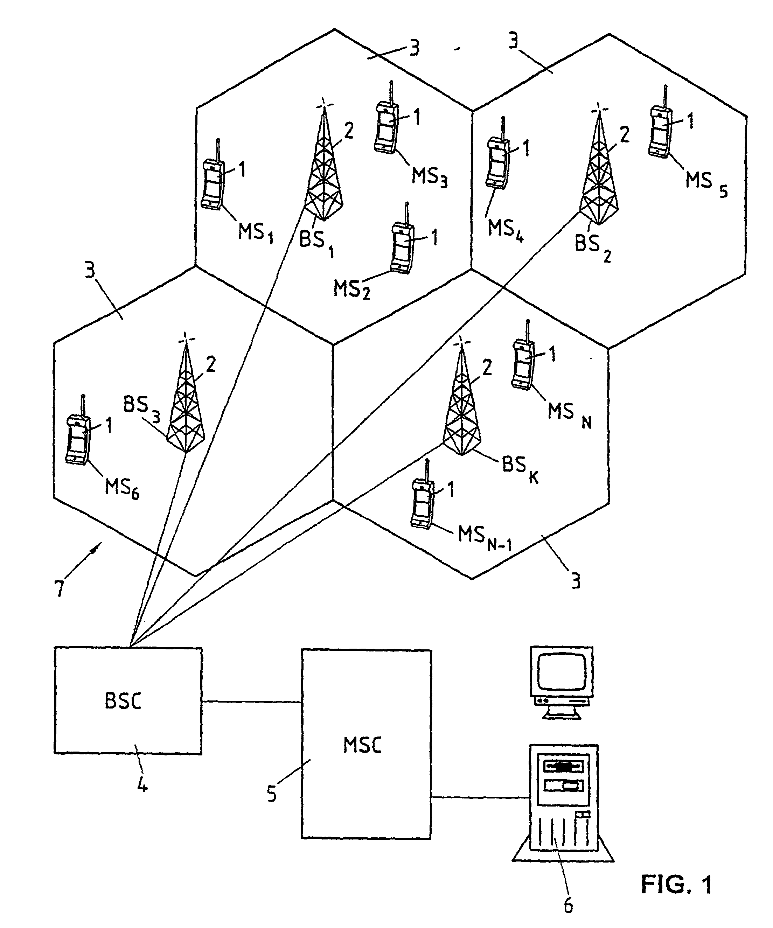

In der Figur 1 wird der prinzipielle Aufbau eines Mobilfunknetzes 7, das zum Beispiel nach dem GSM-Standard arbeitet, gezeigt. Das ganze Gebiet, das von einem Netzbetreiber verwaltet wird, ist von K aneinander angrenzenden und einander überlappenden Funkzellen 3 überdeckt. In jeder Funkzelle 3 ist eine Basisstation 2 (BS, Base Station) vorhanden, welche die Funkversorgung zu N Endgeräten 1 (MS, Mobile Station) übernimmt. Die Endgeräte können zum Beispiel Mobilfunktelefone sein.

Mit 4 ist ein Controller bezeichnet (BSC, Base Station Controller), mit dem mehrere Basistationen gesteuert werden. Der Controller 4 ist beispielsweise dafür verantwortlich, dass der Übergang eines Benutzers von einer Funkzelle 3 zu einer anderen benachbarten Funkzelle funktechnisch reibungslos ablaufen kann. Anhand von automatisch durchgeführten Feldstärkemessungen entscheidet der Controller, wann der Übergang von einer Funkzelle zu welcher benachbarten Funkzelle eingeleitet werden soll. Ein derartiger Übergang wird Handover genannt.

Verschiedene Controller 4 sind ihrerseits in einer übergeordneten Mobilfunkzentrale 5 zusammengefasst. Diese Zentrale stellt den Übergang zu einem nicht dargestellten, drahtgebundenen Netz her.

Mit 6 ist ein Server bezeichnet, mit welchem die mit verschiedenen Mobilgeräten erreichte Qualität im Mobilfunknetz ermittelt wird, wie später beschrieben werden wird.

Die N Mobilgeräte $MS_1$ bis MSN versuchen über die K Basistationen $BS_1$ bis $BS_K$ eine unbekannte Anzahl Verbindungen aufzubauen. Jede Verbindung kann entweder erfolgreich oder nicht erfolgreich sein. Eine nicht erfolgreiche Verbindung ist zum Beispiel eine nicht durch einen der beiden Teilnehmer abgebrochene Verbindung.

Jede Basisstation 2 stellt für jede Verbindung oder jeden Verbindungsversuch mit einem Mobilgerät 1 mindestens einen Qualitätsparameter fest, der die Qualität dieser Verbindung angibt. Der Qualitätsparameter besteht beispielsweise aus einem binären Wert, der den Erfolg oder Misserfolg der Verbindung angibt. In einer Variante könnte der Qualitätsparameter auch ausführlichere Informationen umfassen, zum Beispiel könnte er mehrere Bits umfassen, die verschiedene Parameter der Verbindung angeben, zum Beispiel das Niveau des empfangenen Signals, den Störabstand, usw.

Der oder die bei einer Verbindung ermittelten Qualitätsparameter werden mit einer Identifizierung des Mobilgeräts 1 durch den Controller 4 (BSC) und die Mobilfunkzentrale 5 dem Server 6 übertragen. Die Mobilgerätidentifizierung umfasst beispielsweise die IMSI (International Mobile Subscriber Identity). Die Übermittlung dieser Qualitätsparameter zwischen den Basisstationen 2 und dem Server 6 kann nach jeder Verbindung durchgeführt werden, zum Beispiel innerhalb der standardisierten CDR-Belege (Call Detail Records), die in einem GSM-Mobilfunknetz zu Verrechnungszwecken nach jeder Verbindung übertragen werden. Eine Übertragung im Batch-Modus von Daten, die verschiedene Verbindungen betreffen, ist auch möglich, wobei das angewandte Übertragungsverfahren Gegenstand der Implementierung gemäss des Aufbaus des betreffenden Mobilfunknetzes ist.

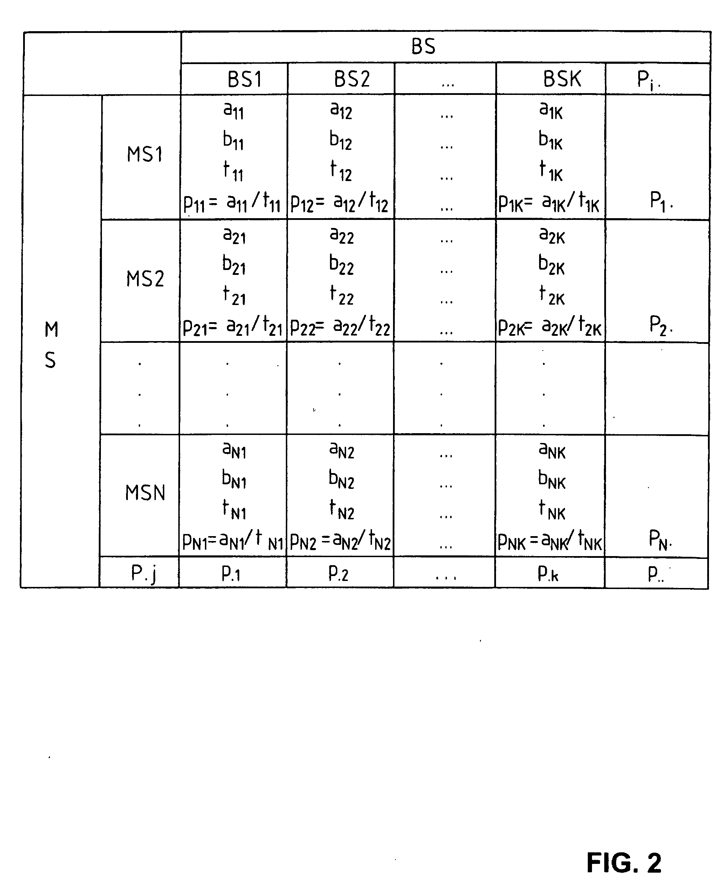

Der Server 6 sammelt die von verschiedenen Basisstationen $BS_1$ bis $BS_K$ im Mobilfunknetz empfangenen Qualitätsparameter, und gruppiert sie in einer Tabelle, von der ein Beispiel auf der Figur 2 gezeigt wird. Diese Tabelle enthält die während einem vordefinierten Zeitfenster gesammelten Qualitätsparameter, zum Beispiel während einem Tag, einer Woche, einem Monat oder seit dem Inkraftsetzen des erfindungsgemässen Verfahrens. Jede Zeile in der Tabelle entspricht einem bestimmten Mobilgerät $MS_1$ bis $MS_N$, während jede Spalte einer bestimmten Basisstation $BS_1$ bis $BS_K$ entspricht. Jedes Feld in der Tabelle enthält vier Zahlen :

| | |
|---|---|
| $a_{ij}$ | Anzahl erfolgreicher Verbindungsaufnahmen der $MS_i$ an $BS_j$ |
| $b_{ij}$ | Anzahl nicht erfolgreicher Verbindungsaufnahmen der $MS_i$ an $BS_j$ |
| $t_{ij}$ | Total der von $MS_i$ an $BS_j$ versuchten Verbindungsaufnahmen (t=a+b). |
| $p_{ij}$ | Erfolgsrate der $MS_i$ an $BS_j$ ($p_{ij} = a_{ij}/t_{ij}$) |

Die letzte Spalte der Tabelle enthält die Overall-Erfolgsrate $p_i$. der $MS_i$ (über alle Basisstationen); $p_i$. hängt vom Anteil der mit dem Mobilgerät $MS_i$ erfolgreich durchgeführten Verbindungen ab und stellt daher eine Qualitätsangabe für dieses Mobilgerät dar. Die letzte Zeile enthält die Overall-Erfolgsrate $p_j$ der $BS_j$ (über alle Mobilgeräte). $p_j$ hängt vom Anteil der mit der Basisstation $BS_j$ erfolgreich durchgeführten Verbindungen ab und stellt daher eine Qualitätsangabe für diese Basisstation dar. Das letzte Feld $p_{ij}$ enthält die Overall-Erfolgsrate (über alle Mobilgeräte und alle Mobilstationen) und hängt von der Qualität des gesamten Mobilfunknetzes 7 ab.

Als Overall-Erfolgsraten werden vorzugsweise die mit den erreichten Häufigkeiten gewichteten Mittelwerte der Erfolgsraten verwendet, damit extreme Erfolgsraten mit einzelnen, seltener benutzten Basisstationen das Ergebnis nicht allzustark beeinflussen :

$$p_i = (t_{i1} \times p_{i1} + t_{i2} \times p_{i2} + t_{ij} \times p_{ij} + ... + t_{iK} \times p_{iK})/(t_{i1} + t_{i2} + t_{ij} + ... + t_{iK})$$

$$p_j = (t_{1j} \times p_{1j} + t_{2j} \times p_{2j} + t_{ij} \times p_{ij} + ... + t_{Nj} \times p_{Nj})/(t_{1j} + t_{2j} + t_{ij} + ... + t_{Nj})$$

Andere Mittelwerte können auch als Qualitätsangaben für die Mobilgeräte undloder für die Basisstationen angewandt werden; wenn die Werte $p_i$. oder $p_j$ schnell schwanken, kann sich zum Beispiel ein gleitender Mittelwert als geeigneter erweisen.

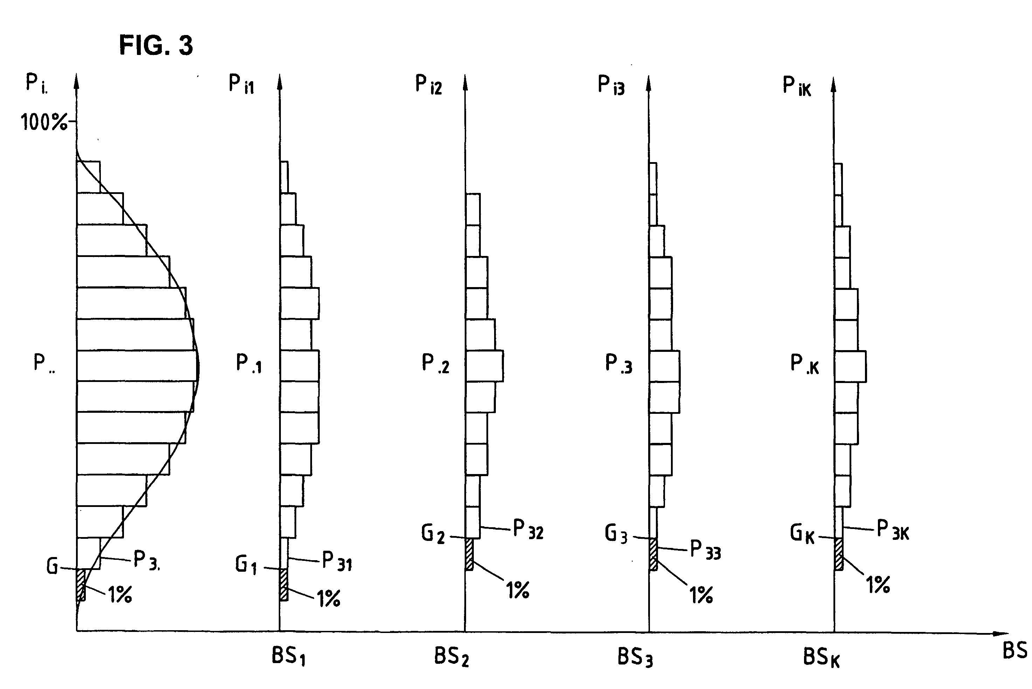

Wir haben jetzt mit den Overall-Erfolgsraten $p_i$. und $p_j$ in der Tabelle 2 eine geeignete Qualitätsangabe für die Mobilgeräte $MS_1$-$MS_N$ und für die Basisstationen $BS_1$-$BS_K$ definiert ; es ist noch nötig, ein Kriterium festzulegen, um zu entscheiden, welche Komponenten als kritisch oder unkritisch eingestuft werden können. Wir werden daher jetzt mit Hilfe der Figur 3 ein mögliches Verfahren beschreiben, das vom Server 6 zur Einstufung von Mobilgeräten und Basisstationen ausgeführt werden kann.

Die erreichten Erfolgsraten $p_{ij}$ der Mobilgeräte $MS_i$ an den Basisstationen $BS_j$ werden als einzelne Realisierung in einem Zeitfenster betrachtet. Die Figur 3 zeigt die Verteilung der Erfolgsraten der Mobilgeräte $MS_j$ über alle Basisstationen $BS_j$. Die Achse $BS_1$ zeigt zum Beispiel die Erfolgsraten $p_{i1}$, die die verschiedenen Mobilgeräte $MS_1$ bis $MS_N$ mit der Basisstation $BS_1$ erreicht haben. Die Achse $p_i$. zeigt die Verteilung der gewichteten mittleren Erfolgsraten der verschiedenen Mobilgeräte $MS_1$ bis $MS_N$, wie oben definiert.

Der Grenzwert G wird als Einstufungskriterium verwendet; wenn die Overall-Erfolgsrate $p_i$. eines Mobilgeräts $MS_i$ (über alle Basisstationen) kleiner als G ist, wird dieses Mobilgerät als kritisch eingestuft. Als Grenzwert kann beispielsweise ein Quantil der Verteilung aller Erfolgsraten $p_i$. angewandt werden; im dargestellten Beispiel stuft das Programm im Server 6 stets ein Prozent der Mobilgeräte $MS_i$ mit den kleinsten Overall-Erfolgsraten $p_i$. als kritisch ein. Ein fixer Grenzwert kann auch angewandt werden: es werden in diesem Fall Mobilgeräte als kritisch eingestuft, die eine fixe vordefinierte Erfolgsrate $p_i$., zum Beispiel 90%, nicht erreichen.

Zusätzlich zum globalen Grenzwert G wird vorzugsweise für jede Basisstation noch ein Mobilgerät-Qualitätskriterium $G_j$ definiert. Zum Beispiel wird für jede Basisstation $BS_J$ ein bestimmter Anteil (Quantil), zum Beispiel ein Prozent der Mobilgeräte, die mit dieser Basisstation die schlechtesten Erfolgsraten $p_{ij}$ erreicht haben, als kritisch für die Benutzung mit dieser Basisstation eingestuft. Auf der Figur 3 wird das Mobitgerät $MS_3$, das eine Erfolgsrate $p_{33}$ kleiner als das Grenzwert $G_3$ aufweist, als kritisch in der Zelle 3 eingestuft, obwohl $MS_3$ global unkritisch ist ($p_3$. > G). Der Benutzer von $MS_3$ kann dann einen Hinweis bekommen, dass in manchen Standorten die Benutzung von seinem Gerät zu Problemen führen kann. Die Grenzwerte $G_j$ können, wie dargestellt, für jede Basisstation unterschiedlich sein.

Die Figur 3 zeigt auch die Overall-Erfolgsrate der Basisstationen $P_{1j}, P_{2j}, ... P_{nj}$ der Basisstationen $BS_1, BS_2, .. BS_k$ (über alle Mobilgeräte). Eine kleine Erfolgsrate $p_{·j}$ für eine Basisstation bedeutet, dass viele Verbindungen mit dieser Basisstation nicht erfolgreich sind, was auf ein Problem mit dieser Station hinweisen kann. Die Erfolgsrate $p_{·j}$ stellt daher eine Basisstation-Qualitätsangabe dar. Ein Grenzwert für die Erfolgsrate $p_{·j}$ der Basisstationen $BS_1$ bis $BS_K$ kann festgelegt werden, zum Beispiel ein Quantil der Verteilung aller Erfolgsraten $p_{·j}$, um problematische Basisstationen aufzudecken. Dieser Grenzwert kann mit dem gleichen Mechanismus wie der Grenzwert für die Erfolgsrate der Mobilgeräte definiert werden.

Eine mit einem bestimmten Mobilgerät erreichte schlechte Erfolgsrate $p_i$. kann auf einen schlechten Standort hinweisen, zum Beispiel weil das Mobilgerät $MS_i$ häufig mit einer schlechteren Basisstation angewandt wird, und nicht unbedingt auf ein kritisches Mobilgerät $MS_i$. Um die Verbindungen, die durch als defekt identifizierte Basisstationen verursacht sind, nicht für die statistische Auswertung der Qualität der Mobilgeräte zu berücksichtigen, können in einer Variante diese Verbindungen aus der Tabelle von Figur 2 ausgeschlossen werden. Umgekehrt können auch die kritischen Mobilgeräte für die Auswertung der Qualität der Basisstationen ausgeschlossen werden (Trimmung der Extremwerte).

Die Benutzer von mit diesem Verfahren als kritisch eingestuften Mobilgeräte werden informiert, zum Beispiel mit einem automatisch verfassten Hinweis auf der Telekommunikationsrechnung. Der Benutzer wird zum Beispiel darauf hingewiesen, sein Mobilgerät prüfen zu lassen oder die Installation zu verbessern, zum Beispiel mit einer Aussenantenne in seinem Wagen. Der Hinweis kann dabei, je nach erreichten Qualitätsparametern, unterschiedlich verfasst werden. Als Variante kann der Benutzer auch mit einer elektronischen Meldung informiert werden, die auf dem Display seines Geräts angezeigt wird. Es können dabei zum Beispiel SMS-Meldungen (Short Message System) angewandt werden. In einer anderen Variante wird der Benutzer mit einer mündlichen Meldung, die zum Beispiel von einem Audiosynthetiser gesprochen wird, über den Zustand seines Mobilgeräts informiert.

Obwohl die Beschreibung nur den Spezialfall der Qualitätsanalyse von Mobilgeräten und Basisstationen enthält, wird der Fachmann verstehen, dass die Erfindung auch zur Qualitätserfassung von anderen Komponenten in einem Mobilfunknetz angewandt werden kann, zum Beispiel von Kabeln zwischen Basisstationen, von Basisstationencontrollern, usw. Ausserdem können die Mobilgeräteidentifizierungen $MS_1$-$MS_N$ aus der Tabelle der Figur 2 mit einer Datenbank verknüpft werden, die für jedes Mobilgerät den Händler oder den Hersteller angibt, so dass eine Händler-Qualitätsangabe leicht ermittelt werden kann.

Es ist ausserdem möglich, Qualitätsparameter mit mehr als einem Bit für jede Verbindung zu sammeln, beispielsweise mehrere binäre oder nicht binäre Parameter, und dadurch zum Preis einer komplizierten Datenverarbeitung die kritischen Komponenten in einem Netz zuverlässiger zu ermitteln und den Benutzern oder den Betreibern eine genauere Diagnose der defekten Geräte stellen zu können.

Der Fachmann wird ausserdem verstehen, dass die vorliegende Erfindung nicht nur zur Identifizierung von defekten Geräten in einem Mobilfunknetz angewandt werden kann, sondern auch zur Planung des Netzes, zum Beispiel um zu bestimmen, wo Basisstationen oder andere Komponenten hinzugefügt oder ersetzt werden müssen.

Die beschriebenen statistischen Methoden sind nur als Beispiel angegeben, und der Fachmann wird verstehen, dass andere Verfahren zur Ermittlung von kritischen Komponenten im Netz auch angewendet werden können. Insbesondere kann eine Diagnose auf die zeitliche Variation der mit einer bestimmten Komponente erreichten Qualitätsangabe basiert werden, um zum Beispiel die Geräte, die schneller veralten, zu identifizieren oder um plötzliche Qualitätseinbussen, zum Beispiel nach einer neuen Installation oder Konfiguration eines bestehenden Geräts, zu ermitteln. In diesem Fall kann der Benutzer mit einem ausführlicheren Hinweis unterrichtet werden, zum Beispiel «Nach der neuen Installation Ihres Mobilgeräts ist der Störabstand um durchschnittlich x dB gesunken ; wir empfehlen Ihnen, die Installation durch einen Spezialisten überprüfen zu lassen».

Wichtige Informationen für die Planung des Mobilfunknetzes können ausserdem gewonnen werden, wenn die ermittelten Qualitätsparameter mit einer Angabe über die Zeit der Verbindung in der oben genannten Tabelle im Server 6 gespeichert werden. In diesem Fall ist es möglich, die Qualität eines festen oder mobilen Teils des Mobilfunknetzes als Funktion der Tageszeit, beziehungsweise der Belastung des Netzes oder des Komponenten, statistisch zu ermitteln.

**Patentansprüche**

1.  Verfahren zur Ermittlung der mit verschiedenen Mobilgeräten (1) erreichten Qualität in einem Mobilfunknetz (7), in welchem Verfahren der Benutzer von einem Mobilgerät (1), dessen ermittelte Mobilgerät-Qualitätsangabe ($p_i$.) gewisse Qualitätskriterien (G, $G_i$) nicht erreicht, identifiziert wird, **dadurch gekennzeichnet,**

    **dass** durch die Basisstationen (2) des Mobilfunknetzes (7) für jede Verbindung mit einem Mobilgerät (1) ein Qualitätsparameter ermittelt wird, der aus einem binären Wert besteht, welcher Wert den Erfolg oder Misserfolg der Verbindung angibt,

    **dass** die Mobilgerät-Qualitätsangabe ($p_i$.) eines Mobilgeräts (1) jeweils aus den ermittelten binären Qualitätsparametem von mehreren Verbindungen mit diesem Mobilgerät (1) durch einen Server (6) im Mobilfunknetz statistisch errechnet wird, wobei die Mobilgerät-Qualitätsangabe ($p_i$.) eines Mobilgeräts (1) als vom Verhältnis der Anzahl erfolgreicher Verbindungen zur Anzahl versuchter Verbindungen abhängige Erfolgsrate ($p_{ij}$, $p_i$.) bestimmt wird, und

    **dass** die Qualitätskriterien (G, $G_i$) durch ein Quantil der Verteilung der Erfolgsraten ($p_i$., $p_{ij}$) der Mobilgeräte (1) des Mobilfunknetzes (7) und/oder durch einen vordefinierten Grenzwert einer Erfolgsrate bestimmt werden.

2.  Verfahren gemäss Anspruch 1, **dadurch gekennzeichnet, dass** die Erfolgsrate ($p_{ij}$, $p_i$.) eines Mobilgeräts (1) spezifisch für individuelle Basisstationen (2), hinsichtlich Verbindungen des betreffenden Mobilgeräts (1) über diese individuellen Basisstationen (2), und/oder insgesamt für sämtliche Basisstationen (2), hinsichtlich Verbindungen des betreffenden Mobilgeräts (1) über sämtliche Basisstationen (2) des Mobilfunknetzes (7), bestimmt wird, und

    **dass** die Qualitätskriterien (G, $G_i$) durch ein Quantil der Verteilung der Erfolgsraten ($p_{ij}$) für Verbindungen über individuelle Basisstationen (2) und/oder durch ein Quantil der Verteilung der Erfolgsraten ($p_i$.) für sämtliche Verbindungen über Basisstationen (2) des Mobilfunknetzes (7) und/oder durch einen vordefinierten Grenzwert einer Erfolgsrate bestimmt werden.

3. Verfahren gemäss einem der vorhergehenden Ansprüche, **dadurch gekennzeichnet, dass** die Benutzer von Mobilgeräten (1), die die benannten Qualitätskriterien (G, $G_i$) nicht erreichen, mit einem Hinweis in der Telefonrechnung, mit einer alphanumerischen Kurzmeldung auf dem Mobilgerät (1) oder mit einer an das Mobilgerät (1) übermittelten mündlichen Meldung informiert werden.

4. Verfahren gemäss einem der vorhergehenden Ansprüche, **dadurch gekennzeichnet, dass** der benannte Server (6) aus Qualitätsparametern von mehreren Verbindungen von verschiedenen Benutzern, die aber dieselbe Komponente des gleichen Typs (2) in der Infrastruktur des Mobilfunknetzes (7) beanspruchen, mindestens eine Komponenten-Qualitätsangabe ($p_{.j}$) für mindestens eine Pluralität dieser Komponenten (2) statistisch ermittelt,

so dass mit dieser Komponenten-Qualitätsangabe die qualitativ weniger gut oder defekten Komponenten des benannten Typs ermittelt werden können.

5. Verfahren gemäss Anspruch 4, **dadurch gekennzeichnet, dass** die benannten Komponenten die Basisstationen (2) umfassen.

6. Verfahren gemäss einem der Ansprüche 4 oder 5, **dadurch gekennzeichnet, dass** die Entscheidung, ob ein Mobilgerät (1) die benannten Kriterien (G, $G_i$) erreicht oder nicht, von der ermittelten Komponenten-Qualitätsangabe der von diesem Mobilgerät (1) beanspruchten Komponenten (2) abhängt.

7. Verfahren gemäss einem der vorhergehenden Ansprüche, **dadurch gekennzeichnet, dass** der Server (6) im Mobilfunknetz für jedes Mobilgerät ($MS_i$) und jede Basisstation ($BS_j$) mindestens eine statistische Basisstation-spezifische Mobilgerät-Qualitätsangabe ($P_{ij}$) aus mindestens einer Pluralität von Verbindungen mit diesem Mobilgerät und dieser Basisstation statistisch errechnet,

und dass der Benutzer von einem Mobilgerät, deren ermittelten Basisstation-spezifische Mobilgerät-Qualitätsangabe gewisse Basisstation-spezifische Qualitätskriterien ($G_i$) nicht erreicht, identifiziert wird.

8. Verfahren gemäss Anspruch 7, **dadurch gekennzeichnet, dass** die benannten Basisstation-spezifischen Qualitätskriterien ($G_i$) in Abhängigkeit von mindestens einer statistischen Eigenschaft der benannten Pluralität von Verbindungen mit dieser Basisstation aufgestellt werden.

9. Verfahren gemäss einem der vorhergehenden Ansprüche, **dadurch gekennzeichnet, dass** mehrere Qualitätsparameter für jede Verbindung gesammelt werden.

10. Verfahren gemäss einem der vorhergehenden Ansprüche, **dadurch gekennzeichnet, dass** der benannte Server (6) aus Qualitätsparametern von mehreren Verbindungen von verschiedenen Benutzern, die aber ein Mobilgerät desselben Händlers oder Herstellers benutzen, mindestens eine Händler-Qualitätsangabe statistisch ermittelt, so dass mit dieser Händler-Qualitätsangabe die Qualität der Mobilgeräte von verschiedenen Händlern oder Herstellern statistisch ermittelt werden kann.

**Claims**

1. Method of determining the quality achieved by different mobile devices (1) in a mobile radio network (7), in which method the user of a mobile device (1), of which the determined mobile device quality indicator ($p_{i.}$) does not fulfil certain quality criteria (G, $G_i$), is identified, **characterised in that**

a quality parameter which consists of a binary value indicating the success or failure of a connection is determined by the base stations (2) of the mobile radio network (7) for each connection with a mobile device (1),

the mobile device quality indicator ($p_{i.}$) of a mobile device (1) is calculated statistically by a server (6) in the mobile radio network in each case from the determined binary quality parameters of multiple connections with this mobile device (1), the mobile device quality indicator ($p_{i.}$) of a mobile device (1) being determined as the success rate ($p_{ij}$, $p_i$) dependent upon the proportion of the number of successful connections to the number of attempted connections, and

the quality criteria (G, $G_i$) are determined through a quantile of the distribution of the success rates ($p_{ij}$, $p_i$) of the mobile devices (1) of the mobile radio network (7) and/or through a predefined limiting value of a success rate.

2. Method according to claim 1, **characterised in that** the success rate ($p_{ij}$, $p_i$) of a mobile device (1) is determined specifically for individual base stations (2) with regard to connections of the respective mobile device (1) via these individual base stations (2), and/or altogether for all base stations (2) with regard to connections of the respective mobile device (1) via all base stations (2) of the mobile radio network (7), and

    **in that** the quality criteria (G, $G_i$) are determined through a quantile of the distribution of the success rates ($p_{ij}$,) for connections via individual base stations (2) and/or through a quantile of the distribution of the success rates ($p_i$) for all connections via base stations (2) of the mobile radio network (7) and/or through a predefined limiting value of a success rate.

3. Method according to one of the preceding claims, **characterised in that** the users of mobile devices (1) which do not fulfil the said quality criteria (G, $G_i$) are informed by means of an indication in the telephone bill, by means of an alphanumeric short message on the mobile device (1), or by means of a verbal message transmitted to the mobile device (1).

4. Method according to one of the preceding claims, **characterised in that** the said server (6) statistically determines from quality parameters of multiple connections of different users using the same component of the same type (2) in the infrastructure of the mobile radio network (7) at least one component quality indicator ($p_{.j}$) for at least a plurality of these components (2),

    so that qualitatively inferior or defective components of the said type may be determined with this component quality indicator.

5. Method according to claim 4, **characterised in that** the said components include the base stations (2).

6. Method according to one of the claims 4 or 5, **characterised in that** the decision as to whether or not a mobile device (1) fulfils the said criteria (G, $G_i$) depends on the determined component quality indicator of the components (2) used by this mobile device (1).

7. Method according to one of the preceding claims, **characterised in that** the server (6) in the mobile radio network statistically calculates for each mobile device ($MS_i$) and for each base station ($BS_j$) at least one statistical base-station-specific mobile device quality indicator ($p_{ij}$) from at least a plurality of connections with this mobile device and this base station,

    and **in that** the user of a mobile device, of which the determined base-station-specific mobile device quality indicator does not fulfil certain base-station-specific quality criteria ($G_i$), is identified.

8. Method according to the claim 7, **characterised in that** the said base-station-specific quality criteria ($G_i$) are established depending on at least one statistical attribute of the said plurality of connections with this base station.

9. Method according to one of the preceding claims, **characterised in that** multiple quality parameters are collected for each connection.

10. Method according to one of the preceding claims, **characterised in that** the said server (6) statistically determines at least one dealer quality indicator from quality parameters of multiple connections of different users, who use a mobile device of the same dealer or manufacturer, so that the quality of mobile devices from different dealers or manufacturers may be statistically determined with this dealer quality indicator.

**Revendications**

1. Procédé de détermination de la qualité obtenue dans un réseau de téléphonie mobile (7) avec divers appareils mobiles (1), procédé avec lequel est identifié l'utilisateur d'un appareil mobile (1) dont l'indication de qualité déterminée (pi.) ne satisfait pas à certains critères de qualité (G, Gi), **caractérisé en ce**

    **que** les stations de base (2) du réseau de téléphonie mobile (7) déterminent, pour chaque communication avec un appareil mobile (1), un paramètre de qualité constitué par une valeur binaire qui indique le succès ou l'échec de la communication,

    **que** l'indication de qualité (pi.) d'un appareil mobile (1) est calculée statistiquement dans chaque cas, à partir des paramètres binaires de qualité de plusieurs communications ayant eu lieu avec cet appareil mobile (1), par un serveur (6) se trouvant dans le réseau de téléphonie mobile, l'indication de qualité (pi.) d'un appareil mobile (1) étant déterminée comme étant le taux de succès (pij, pi.), qui est fonction du rapport entre le nombre de communications ayant eu lieu avec succès et le nombre de tentatives de communications, et

    **que** les critères de qualité (G, Gi) sont déterminés par un quantile de la répartition des taux de succès (pi., pij) des appareil mobile (1) du réseau de téléphonie mobile (7) ou par une valeur limite prédéterminée d'un taux de succès, ou les deux.

**2.** Procédé selon la première revendication, **caractérisé en ce que** le taux de succès (pij, pi.) d'un appareil mobile (1) est déterminé spécifiquement pour des stations de base (2) individuelles en ce qui concerne les communications de l'appareil mobile (1) considéré passant par ces stations de base (2) individuelles ou d'une manière globale pour toutes les stations de base (2) en ce qui concerne les communications de l'appareil mobile (1) considéré passant par toutes les stations de base (2) du réseau de téléphonie mobile (7), ou ces deux possibilités à la fois, et
que les critères de qualité (G, Gi) sont déterminés par un quantile de la répartition des taux de succès (pij) pour les communications passant par des stations de base (2) individuelles ou bien, ou les deux, par un quantile de la répartition des taux de succès (pi.) pour toutes les communications passant par des stations de base (2) du réseau de téléphonie mobile (7) ou bien, ou les deux à la fois, par une valeur limite déterminée d'un taux de succès.

**3.** Procédé selon l'une des revendications précédentes, **caractérisé en ce que** les utilisateurs dont les appareils mobiles (1) ne satisfont pas aux critères de qualité (G, Gi) indiqués en sont informés par une mention sur leur facture de téléphone, un message alphanumérique court envoyé à l'appareil mobile (1) ou un message oral envoyé à l'appareil mobile (1).

**4.** Procédé selon l'une des revendications précédentes, **caractérisé en ce que** le serveur (6) mentionné détermine statistiquement au moins une indication de qualité d'éléments constitutifs (p.j) pour au moins un certain nombre de ces éléments constitutifs (2), à partir de paramètres de qualité de plusieurs communications établies par divers utilisateurs ou avec eux, mais qui ont recours au même élément constitutif du même type (2) dans l'infrastructure du réseau de téléphonie mobile (7), de telle sorte que cette indication de qualité d'éléments constitutifs permet de déterminer les éléments constitutifs du type indiqué qui sont de moindre qualité ou défectueux.

**5.** Procédé selon la revendication 4, **caractérisé en ce que** les éléments constitutifs mentionnés comprennent les stations de base (2).

**6.** Procédé selon la revendication 4 ou 5, **caractérisé en ce que** la décision sur le point de savoir si un appareil mobile (1) satisfait ou non aux critères indiqués (G, Gi) dépend de l'indication établie de qualité des éléments constitutifs (2) auquel cet appareil mobile (1) a recours.

**7.** Procédé selon l'une des revendications précédentes, **caractérisé en ce que** le serveur (6), dans le réseau de téléphonie mobile, calcule statistiquement, pour chaque appareil mobile (MSi) et pour chaque station de base (BSj), au moins une indication de qualité (pij) statistique d'appareil mobile spécifique de la station de base à partir d'au moins un certain nombre de communications avec cet appareil mobile et cette station de base, et que l'utilisateur d'un appareil mobile dont l'indication établie de qualité d'appareil mobile spécifique de la station de base ne satisfait pas à certains critères de qualité (Gi) spécifiques de la station de base est identifié.

**8.** Procédé selon la revendication 7, **caractérisé en ce que** les critères de qualité (Gi) mentionnés spécifiques de la station de base sont établis en fonction d'au moins une propriété statistique des communications avec cette station de base.

**9.** Procédé selon l'une des revendications précédentes, **caractérisé en ce que** plusieurs paramètres de qualité sont rassemblés pour chaque communication.

**10.** Procédé selon l'une des revendications précédentes, **caractérisé en ce que** le serveur (6) détermine statistiquement au moins une indication de qualité commerciale à partir de paramètres de qualité de plusieurs communications d'utilisateurs différents mais qui utilisent des appareils mobiles provenant du même commerçant ou du même fabricant, de telle sorte que, avec cette indication de qualité du commerçant, on peut déterminer statistiquement la qualité des appareils mobiles de différents commerçants ou fabricants.

FIG. 1

| | | BS | | | | $P_i.$ |
|---|---|---|---|---|---|---|
| | | BS1 | BS2 | ... | BSK | |
| M S | MS1 | $a_{11}$ <br> $b_{11}$ <br> $t_{11}$ <br> $p_{11} = a_{11}/t_{11}$ | $a_{12}$ <br> $b_{12}$ <br> $t_{12}$ <br> $p_{12} = a_{12}/t_{12}$ | ... <br> ... <br> ... <br> ... | $a_{1K}$ <br> $b_{1K}$ <br> $t_{1K}$ <br> $p_{1K} = a_{1K}/t_{1K}$ | $P_1.$ |
| | MS2 | $a_{21}$ <br> $b_{21}$ <br> $t_{21}$ <br> $p_{21} = a_{21}/t_{21}$ | $a_{22}$ <br> $b_{22}$ <br> $t_{22}$ <br> $p_{22} = a_{22}/t_{22}$ | ... <br> ... <br> ... <br> ... | $a_{2K}$ <br> $b_{2K}$ <br> $t_{2K}$ <br> $p_{2K} = a_{2K}/t_{2K}$ | $P_2.$ |
| | . <br> . <br> . | . <br> . <br> . | . <br> . <br> . | . <br> . <br> . | . <br> . <br> . | |
| | MSN | $a_{N1}$ <br> $b_{N1}$ <br> $t_{N1}$ <br> $p_{N1} = a_{N1}/t_{N1}$ | $a_{N2}$ <br> $b_{N2}$ <br> $t_{N2}$ <br> $p_{N2} = a_{N2}/t_{N2}$ | ... <br> ... <br> ... <br> ... | $a_{NK}$ <br> $b_{NK}$ <br> $t_{NK}$ <br> $p_{NK} = a_{NK}/t_{NK}$ | $P_N.$ |
| | $P.j$ | $P.1$ | $P.2$ | . . . | $P.k$ | $P..$ |

**FIG. 2**

FIG. 3